# EUROPEAN PATENT SPECIFICATION

(11) **EP 2 897 360 B1**
(45) Date of publication and mention of the grant of the patent: **30.09.2020**
(21) Application number: 13847695.7
(22) Date of filing: 28.08.2013
(51) Int. Cl.: H04N 7/18, H04L 29/12

(54) **METHOD FOR GETTING A DEVICE ONLINE, ADDRESS DELIVERY METHOD, PERIPHERAL UNIT AND SERVER**
VERFAHREN ZUR ONLINE-STELLUNG EINER VORRICHTUNG, ADRESSAUSGABEVERFAHREN, PERIPHERIEEINHEIT UND SERVER
PROCÉDÉ POUR METTRE UN DISPOSITIF EN LIGNE, PROCÉDÉ DE DISTRIBUTION D'ADRESSE, UNITÉ PÉRIPHÉRIQUE ET SERVEUR

(30) Priority: 19.10.2012 CN 201210400660
(43) Date of publication of application: 22.07.2015
(73) Proprietor: ZTE Corporation, Shenzhen, Guangdong 518057 (CN)
(72) Inventor: MA, Kedi, Shenzhen Guangdong Province 518057 (CN); ZHOU, Yonghong, Shenzhen Guangdong Provence 518057 (CN); WANG, Donghui, Shenzhen Guangdong Provence 518057 (CN)
(74) Representative: Wallinger Ricker Schlotter Tostmann
(86) International application number: PCT/CN2013/082428
(87) International publication number: WO 2014/059826

(56) References cited:
- CN-A- 101 170 687
- CN-A- 101 174 999
- CN-A- 102 196 248
- JP-A- 2008 312 069
- US-A1- 2011 289 228
- "Cisco Small Business VC 220 Dome WDR Day/Night PoE Network Camera ADMINISTRATION GUIDE", , 1 January 2010 (2010-01-01), pages 1-108, XP055270068, Retrieved from the Internet: URL:http://data.manualslib.com/pdf3/77/767 5/767409-cisco/vc_220.pdf?637e84feb7ce9805 4f64ff18d5e5eac5 [retrieved on 2016-05-02]
- DROMS BUCKNELL UNIVERSITY R: "Dynamic Host Configuration Protocol; rfc2131.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 March 1997 (1997-03-01), XP015007915, ISSN: 0000-0003

## Description

### Technical Field

The present invention relates to the field of video surveillance, and more particularly, to a method for getting a video surveillance front-end device online, a method for sending device addresses, a front-end device, a central management server and a video surveillance system.

### Background of the Related Art

The applications of video surveillance service are wider and wider, and currently, after video surveillance front-end devices are installed, the front-end devices need to be manually configured with device IDs one by one, so that the devices can be connected to the video surveillance system.

The traditional method for getting a video surveillance front-end device online comprises the following process: a video surveillance system assigns one device ID to each front-end device, and after the front-end devices are installed, the front-end devices need to be manually configured with their corresponding device IDs, and after the front-end devices are connected to the network, they carry their device IDs to register to a central management server, and after the registration is successful, the front-end devices carry their device IDs to submit applications for getting online to an online management server, and after getting online successfully, the front-end devices can normally access the video surveillance system to carry out various video surveillance services.

A medium-sized video surveillance system has at least thousands of front-end devices, and since the front-end devices need to be manually configured with device IDs one by one, the labor costs are increased, and meanwhile it also results in the getting-online period of the front-end devices being lengthened.

The document "Cisco Small Business VC 220 Dome WDR Day/Night PoE Network Camera ADMINSTRATION GUIDE" discloses how to perform IP Setting page to set the IP address and other related settings on the Cisco VC 220 Network Camera Software.

The document JP2008312069A discloses a method for network configuration of a monitoring camera with IP acquisition from a DHCP server during MAC address registration.

### Summary of the Invention

The present invention provides a method for getting a device online, an address delivery method, a front-end device, and a server to solve the problem in the related art that front-end devices need to be manually configured with device address (ID) one by one.

The independent claims define the invention, while the dependent claims add further detailed embodiments of the invention.

The beneficial effects of the embodiments of the present invention are: achieving a registration to the central management server with the front-end device's own device identification, and after the registration is successful, receiving a device ID assigned by the central management server, thus automatically configuring the device ID, and after the configuration of device ID is completed, the device ID can be used to request to get online without human participation, thus shortening the getting-online period of the front-end device and saving the labor costs.

### Brief Description of the Drawings

FIG. 1 is a flow chart of a method for getting a video surveillance front-end device online provided in an embodiment of the present invention;
FIG. 2 is a schematic diagram of a video surveillance system provided in an embodiment of the present invention.

### Preferred Embodiments of the Invention

The main idea of the embodiments of the present invention is: using the video surveillance front-end device's own device identification to achieve a registration to the central management server, and after the registration is successful, receiving a device ID assigned by the central management server to automatically complete the configuration of the device ID without human participation. After completing the configuration of the device address, the device address can be used to request to get online. The front-end device's own device identification refers to information playing the role of identification, including but not limited to the identification information preset in the front-end device when leaving the factory, and the identification information generated by the front-end device itself, such as the media access control (MAC) address. Such kind of identification information can avoid the additional step of setting identification information during the using process. The device ID assigned by the central management server is mainly used in the video surveillance system and works as the front-end device's unique identification in the video surveillance system.

The front-end device can be any device with video capture function, such as a network camera, a network encoder, a mobile phone, a PDA and so on.

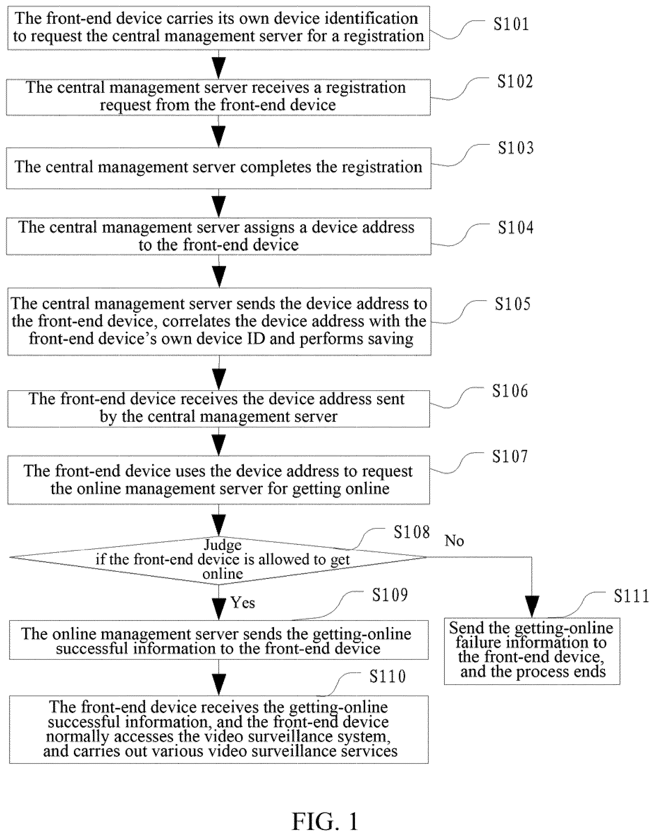

FIG. 1 is a flow chart of a method for getting a video surveillance front-end device online provided in an embodiment of the present invention, and as shown in FIG. 1, it comprises the following steps:
in S101, the front-end device carries its own device identification to request the central management server for a registration. Specifically, the front-end device sends a registration request carrying its own device identification to the central management server.

Typically, the address of the central management server at each project office point is known and unique, therefore the address of the central management server can be preset in the front-end device, which facilitates the front-end device to establish a connection to the central management server. The communication mode between the front-end device and the central management server can be a wired or wireless connection.

In S102, the central management server receives a registration request from the front-end device.

In S103, the central management server completes the registration.

In S104, the central management server assigns a device ID to the front-end device, and the device ID is unique for the front-end device in the same video surveillance system and mainly used for getting the front-end device online.

In S105, the central management server sends the device ID to the front-end device, correlates the device ID with the front-end device's own device identification, and performs saving.

Meanwhile, the central management server can also send the address of the online management server to the front-end device. Thus the front-end device would not need to save the address of the online management server by default or obtain the address of the online management server from other devices.

Preferably, the central management server can correlate the device ID with the front-end device's own device identification and save it in a correlation list.

In S106, the front-end device receives the device ID sent by the central management server.

In S107, the front-end device uses the device ID to request the online management server for getting online.

Specifically, the front-end device establishes a connection to the online management server according to the address of the online management server. The address of the online management server can be saved by the front-end device by default, or sent by the central management server in step S105, or obtained by the front-end device from other devices.

The communication mode between the front-end device and the online management server may be a wired or wireless connection.

In S108, the online management server receives a getting-online request from the front-end device, and judges whether the front-end device is allowed to get online or not according to the device ID in the getting-online request, if yes, proceeding to step S109, otherwise proceeding to step S111.

The specific process of the online management server judging whether the front-end device is allowed to get online according to the device ID in the getting-online request can be: the online management server inquiring the device ID list, and judging whether the device ID in the getting-online request exists in the device ID list or not, and if yes, allowing the front-end device to get online, otherwise, not allowing the front-end device to get online. The device ID list is provided by the central management server, and the device ID list can be the same as or different from the correlation list saved in the central management server.

The communication mode between the central management server and the online management server may be a wired or wireless connection.

In S109, the online management server sends the getting-online successful information to the front-end device.

In S110, the front-end device receives the getting-online successful information, and the front-end device normally accesses the video surveillance system and thus carries out various video surveillance services.

In S111, if the front-end device is not allowed to get online, it is to send the getting-online failure information to the front-end device, and the process ends.

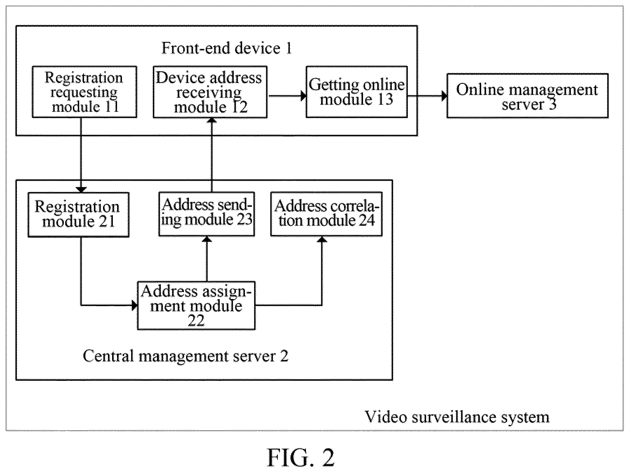

FIG. 2 is a schematic diagram of a video surveillance system provided in an embodiment of the present invention, and as shown in FIG. 2, the video surveillance system comprises at least one front-end device 1, a central management server 2 and an online management server 3, wherein the communication mode between the front-end device 1 and the central management server 2 as well as the online management server 3 may be a wired or wireless connection. The communication mode between the central management server 2 and the online management server 3 may be a wired or wireless connection. The front-end device 1 is used to carry its own device identification to request the central management server 2 for a registration; after the registration is successful, receive the device ID assigned by the central management server 2 to the front-end device 1; use the device ID to request the online management server 3 for getting online; receive a request response fed back by the online management server 3. The central management server 2 is used to receive a registration request from the front-end device 1 and complete the registration, wherein the registration request carries the front-end device's own device identification; assign a device ID to the front-end device 1; send the device ID to the front-end device 1, correlate the device ID with the front-end device's own device identification and save it. The online management server 3 is used to receive a getting-online request from the front-end device 1, and judge whether the front-end device is allowed to get online or not according to the device ID in the getting-online request, and feed back a request response to the front-end device 1.

Specifically, the front-end device 1 can send a registration request carrying its own device identification to the central management server 2. Its own device identification can be any information playing the role of identification. Preferably, its own device identification can be a medium access control (MAC) address. After completing the registration of the front-end device 1, the central management server 2 assigns a device ID to the front-end device 1. The central management server 2 may also send the address of the online management server 3 to the front-end device 1. Thus the front-end device 1 does not need to save the address of the online management server 3 by default or obtain it from other devices. The front-end device 1 establishes a connection to the online management server 3 according to the address of the online management server 3, and the getting-online request carries the device ID of the front-end device 1. The online management server 3 judges whether the front-end device 1 is allowed to get online or not according to the device ID in the getting-online request, and if yes, the online management server 3 sends the getting-online successful information to the front-end device 1, and the front-end device 1 receives the getting-online successful message, and the front-end device 1 normally accesses the video surveillance system, so as to carry out various video surveillance services. If no, the getting-online failure information is sent to the front-end device 1, and the process ends.

The front-end device 1 may further comprise a registration requesting module 11, a device address receiving module 12 and a getting online module 13, wherein:
the registration requesting module 11 is used to carry the front-end device 1's own device identification to request the central management server 2 for a registration. Specifically, the registration requesting module 11 may send a registration request carrying its own device identification to the central management server 2. Its own device identification can be any information playing the role of identification. Preferably, its own device identification may be a medium access control (MAC) address.

The device address receiving module 12 is used to: after the registration is successful, receive a device ID assigned by the central management server 2 to the front-end device 1. Preferably, the device address receiving module 12 may also be used to: after the registration is successful, receive an address of the online management server sent by the central management server.

The getting online module 13 is used to use the device ID to request the online management server 3 for getting online, and receive a request response fed back by the online management server 3.

The central management server 2 may further comprise a registration module 21, an address assignment module 22, an address sending module 23 and an address correlation module 24, wherein:
the registration module 21 is used to receive a registration request from the front-end device 1 and completes the registration, wherein the registration request carries the front-end device 1's own device identification.

The address assignment module 22 is used to assign a device ID to the front-end device 1.
the address sending module 23 is used to send the device ID to the front-end device 1; preferably, the address sending module 23 is further used to send the address of the online management server 3.

The address correlation module 24 is used to correlate the device ID with the front-end device 1's device address sending module and save it.

The above content is a further and detailed description of the present invention with reference to the specific embodiments, and cannot be identified that the specific embodiments of the present invention are only limited to the description.

### Industrial Applicability

The embodiments of the present invention use the front-end device's own device identification to achieve the registration to the central management server, and receive a device ID assigned by the central management server after the registration is successful, thus automatically configuring the device ID, and after the configuration of device ID is completed, the device ID can be used to request to get online without human participation, thus shortening the getting-online period of the front-end device and saving the labor costs.

## Claims

1. A method for getting a video surveillance front-end device (1) online, comprising:
sending from a front-end device (1) a registration request that carries an own device identification of the front-end device (1) to request a central management server (2) for a registration, wherein an address of the central management server (2) is preset in the front-end device (1);
after the registration is successful, receiving, by the front-end device (1), a device address assigned by the central management server (2) to the front-end device (1); **characterized by**, after the registration is successful, the front-end device (1) further receives an address of an online management server (3) sent by the central management server (2), and the front-end device (1) establishes a connection to the online management server (3) according to the address of the online management server (3);
where the front-end device (1) sends a getting-online request carrying the device address to the online management server (3) for getting online allowance according to the device address, and receives a request response fed back by the online management server (3).

2. The method for getting a video surveillance front-end device (1) online of claim 1, wherein the own device identification of the front-end device (1) is a medium access control address.

3. A method for sending a device address to a video surveillance front-end device (1), comprising:
a central management server (2) receiving a registration request from a front-end device (1), wherein the registration request carries an own device identification of the front-end device (1) and an address of the central management server (2) is preset in the front-end device (1);
after completing a registration of the front-end device (1), the central management server (2) assigning a device address to the front-end device (1);
**characterized by**, the central management server (2) sending the device address to the front-end device (1), correlating the device address with the device identification of the front-end device (1) and performing saving; and
the central management server (2) sending, after completing the registration, an address of an online management server to the front-end device (1);wherein the online management server (3) is responsible to allow the front-end device (1) to get online according to the device address.

4. The method for sending a device address of video surveillance front-end device (1) of claim 3, wherein the own device identification of the front-end device (1) is a medium access control address.

5. A video surveillance front-end device (1), comprising a registration requesting module (11), a device address receiving module (12) and a getting online module (13),wherein:
the registration requesting module (11) is configured to: send a registration request that carries an own device identification of the front-end device (1) to request a central management server (2) for a registration, wherein an address of the central management server (2) is preset in the front-end device (1);
the device address receiving module (12) is configured to: after the registration is successful, receive a device address assigned by the central management server (2) to the front-end device (1);
**characterized in that**, the device address receiving module (12) is further configured to: after the registration is successful, receive an address of an online management server (3) sent by the central management server (2);
and **in that** the getting online module (13) is configured to establish a connection to the online management server (3) according to the address of the online management server (3) and to send a request, carrying the device address for getting online allowance according to the device address, to the online management server (3); and to receive a request response fed back by the online management server (3).

6. A central management server (2), comprising a registration module (21), an address assignment module (22), an address sending module (23) and an address correlation module (24), wherein:
the registration module (21) is configured to: receive a registration request from a video surveillance front-end device (1) and complete a registration, wherein the registration request carries an own device identification of the video surveillance front-end device (1) ;
**characterized in that**, the address assignment module (22) is configured to: assign, after completing the registration, a device address to the video surveillance front-end device (1);
the address sending module (23) is configured to: send the device address to the video surveillance front-end device (1);
the address correlation module (24) is configured to: correlate the device address with the device identification of the front-end device (1) and perform saving;
wherein the address sending module (23) is further configured to: send, after completing the registration, an address of an online management server (3) to the video surveillance front-end device (1);wherein the online management server (3) is responsible to allow the video surveillance front-end device (1) to get online according to the device address.

## Patentansprüche

1. Verfahren zum online Schalten eines Datenstationsendgeräts (1) zur Videoüberwachung, welches umfasst,
dass von dem Datenstationsendgerät (1) eine Anfrage zur Registrierung gesendet wird, die eine eigene Gerätekennung des Datenstationsendgeräts (1) trägt;
dass, nachdem die Registrierung abgeschlossen worden ist, eine Geräteadresse, die von dem zentralen Verwaltungsserver (2) dem Datenstationsendgerät (1) zugewiesen worden ist, durch das Datenstationsendgerät (1) empfangen wird; **dadurch gekennzeichnet, dass**
nachdem die Registrierung abgeschlossen worden ist, das Datenstationsendgerät (1) ferner eine Adresse eines Online-Verwaltungsservers (3) empfängt, die von dem zentralen Verwaltungsserver (2) gesendet worden ist, wobei das Datenstationsendgerät (1) eine Verbindung mit dem Online-Verwaltungsserver (3) gemäß der Adresse des Online-Verwaltungsservers (3) herstellt;
wobei das Datenstationsendgerät (1) eine Anfrage zum online Schalten, die die Geräteadresse trägt, an den Online-Verwaltungsserver (3) sendet, um eine Erlaubnis zum online Schalten gemäß der Geräteadresse zu erhalten, und um eine Antwort auf die Anfrage von dem Online-Verwaltungsserver (3) zu empfangen.

2. Verfahren zum online Schalten des Datenstationsendgeräts (1) zur Videoüberwachung nach Anspruch 1, wobei die eigene Gerätekennung des Datenstationsendgeräts (1) eine Steueradresse eines Medienzugriffs ist.

3. Verfahren zum Senden einer Geräteadresse an ein Datenstationsendgerät (1) zur Videoüberwachung, welches umfasst,
dass ein zentraler Verwaltungsserver (2) eine Anfrage zur Registrierung von einem Datenstationsendgerät (1) empfängt, wobei die Anfrage zur Registrierung eine eigene Gerätekennung des Datenstationsendgeräts (1) trägt; und
dass eine Adresse des zentralen Verwaltungsservers (2) in dem Datenstationsendgerät (1) voreingestellt ist;
dass, nachdem die Registrierung abgeschlossen worden ist, der zentrale Verwaltungsserver (2) dem Datenstationsendgerät (1) eine Geräteadresse zuweist;
**dadurch gekennzeichnet, dass** der zentrale Verwaltungsserver (2) die Geräteadresse an das Datenstationsendgerät (1) sendet, er die Geräteadresse mit der Gerätekennung des Datenstationsendgeräts (1) korreliert und er eine Sicherung durchführt; und
dass, nachdem die Registrierung abgeschlossen worden ist, der zentrale Verwaltungsserver (2) eine Adresse eines Online-Verwaltungsservers an das Datenstationsendgerät (1) sendet, wobei der Online-Verwaltungsserver (3) dafür verantwortlich ist, dem Datenstationsendgerät (1) zu erlauben gemäß der Geräteadresse online geschaltet zu werden.

4. Verfahren zum Senden einer Vorrichtungsadresse des Datenstationsendgeräts (1) zur Videoüberwachung nach Anspruch 3, wobei die eigene Gerätekennung des Datenstationsendgeräts (1) eine Steueradresse eines Medienzugriffs ist.

5. Datenstationsendgerät (1) zur Videoüberwachung, welches ein Modul (11) zur Registrierungsanfrage, ein Modul (12) zum Geräteadressenempfang und ein Modul (13) zum online Schalten aufweist,
wobei das Modul (11) zur Registrierungsanfrage ausgestaltet ist, um eine Anfrage zur Registrierung zu senden, die eine eigene Gerätekennung des Datenstationsendgeräts (1) enthält, um eine Registrierung von einem zentralen Verwaltungsserver (2) anzufragen, bei dem eine Adresse des zentralen Verwaltungsservers (2) in dem Datenstationsendgerät (1) voreingestellt ist;
wobei das Modul (12) zum Geräteadressenempfang ausgestaltet ist, um, nachdem die Registrierung abgeschlossen worden ist, eine Geräteadresse zu empfangen, die dem Datenstationsendgerät (1) von dem zentralen Verwaltungsserver (2) zugewiesen worden ist;
**dadurch gekennzeichnet, dass** das Modul (12) zum Geräteadressenempfang weiter ausgestaltet ist, um eine Adresse eines Online-Verwaltungsservers (3) zu empfangen, die von dem zentralen Verwaltungsserver (2) gesendet worden ist;
und dass das Modul (13) zum online Schalten ausgestaltet ist, um eine Verbindung mit dem Online-Verwaltungsserver (3) gemäß der Adresse des Online-Verwaltungsservers (3) herzustellen und um eine Anfrage zu senden, die die Geräteadresse an den Online-Verwaltungsserver (3) trägt, um eine Erlaubnis zum online Schalten gemäß der Geräteadresse zu erhalten; und um eine Antwort auf die von dem Online-Verwaltungsserver (3) zurückgegebene Anfrage zu erhalten.

6. Zentraler Verwaltungsserver (2), welcher ein Modul (21) zur Registrierung, ein Modul (22) zur Adressenzuweisung, ein Modul (23) zur Adressensendung und ein Modul (24) zur Adressenkorrelation aufweist, bei denen:
wobei das Modul (21) zur Registrierung ausgestaltet ist, um eine Anfrage zur Registrierung von einem Datenstationsendgerät (1) zur Videoüberwachung zu empfangen und um die Registrierung durchzuführen, wobei die Anfrage zur Registrierung eine eigene Gerätekennung des Datenstationsendgeräts (1) zur Videoüberwachung trägt;
**dadurch gekennzeichnet, dass** das Modul (22) zur Adressenzuweisung ausgestaltet ist, um eine Geräteadresse dem Datenstationsendgerät (1) der Videoüberwachung zuzuweisen, nachdem die Registrierung abgeschlossen worden ist;
dass das Modul (23) zur Adressensendung ausgestaltet ist, um die Geräteadresse an das Datenstationsendgerät (1) der Videoüberwachung zu senden;
und dass das Modul (24) zur Adressenkorrelation ausgestaltet ist, um die Geräteadresse mit der Gerätekennung des Datenstationsendgeräts (1) zu korrelieren und um eine Sicherung durchzuführen;
wobei das Modul (23) zur Adressensendung ferner ausgestaltet ist, um, nachdem die Registrierung abgeschlossen worden ist, eine Adresse von einem Online-Verwaltungsserver (3) an das Datenstationsendgerät (1) zur Videoüberwachung zu senden; wobei der Online-Verwaltungsserver (3) dafür verantwortlich ist, dem Datenstationsendgerät (1) zur Videoüberwachung zu erlauben gemäß der Geräteadresse online geschaltet zu werden.

## Revendications

1. Procédé pour obtenir une mise en ligne d'un dispositif frontal (1) de vidéosurveillance, comprenant les étapes suivantes :
envoyer, à partir d'un dispositif frontal (1), une demande d'enregistrement qui porte une identification de dispositif personnelle du dispositif frontal (1), pour demander un enregistrement à un serveur de gestion central (2), dans lequel une adresse du serveur de gestion central (2) est prédéfinie dans le dispositif frontal (1) ;
après que l'enregistrement a été réussi, recevoir, par le dispositif frontal (1), une adresse de dispositif attribuée par le serveur de gestion central (2) au dispositif frontal (1) ; **caractérisé en ce que**, après que l'enregistrement a été réussi, le dispositif frontal (1) reçoit en outre une adresse d'un serveur de gestion en ligne (3) envoyée par le serveur de gestion central (2), et le dispositif frontal (1) établit une connexion avec le serveur de gestion en ligne (3) selon l'adresse du serveur de gestion en ligne (3) ;
où le dispositif frontal (1) envoie une demande de mise en ligne portant l'adresse de dispositif au serveur de gestion en ligne (3) pour obtenir une autorisation de mise en ligne selon l'adresse de dispositif, et reçoit une réponse à la demande renvoyée par le serveur de gestion en ligne (3).

2. Procédé pour obtenir une mise en ligne d'un dispositif frontal (1) de vidéosurveillance de la revendication 1, dans lequel l'identification de dispositif personnelle du dispositif frontal (1) est une adresse de contrôle d'accès au support.

3. Procédé pour envoyer une adresse de dispositif à un dispositif frontal (1) de vidéosurveillance, comprenant les étapes suivantes :
un serveur de gestion central (2) reçoit une demande d'enregistrement à partir d'un dispositif frontal (1), dans lequel la demande d'enregistrement porte une identification de dispositif personnelle du dispositif frontal (1) et
une adresse du serveur de gestion central (2) est prédéfinie dans le dispositif frontal (1) ;
après avoir fait un enregistrement du dispositif frontal (1), le serveur de gestion central (2) attribue une adresse de dispositif au dispositif frontal (1) ;
**caractérisé en ce que**, le serveur de gestion central (2) envoie l'adresse de dispositif au dispositif frontal (1), en corrélant l'adresse de dispositif avec l'identification de dispositif du dispositif frontal (1) et en effectuant la sauvegarde ; et
le serveur de gestion central (2) envoie, après avoir fait l'enregistrement, une adresse d'un serveur de gestion en ligne au dispositif frontal (1) ; dans lequel le serveur de gestion en ligne (3) est chargé d'autoriser le dispositif frontal (1) à se mettre en ligne selon l'adresse de dispositif.

4. Procédé pour envoyer une adresse de dispositif de dispositif frontal (1) de vidéosurveillance de la revendication 3, dans lequel l'identification de dispositif personnelle du dispositif frontal (1) est une adresse de contrôle d'accès au support.

5. Dispositif frontal (1) de vidéosurveillance, comprenant un module de demande d'enregistrement, un module de réception d'adresse de dispositif (12) et un module de mise en ligne (13), dans lequel :
le module de demande d'enregistrement (11) est configuré pour : envoyer une demande d'enregistrement qui porte une identification de dispositif personnelle du dispositif frontal (1) pour demander un enregistrement à un serveur de gestion central (2), dans lequel une adresse du serveur de gestion central (2) est prédéfinie dans le dispositif frontal (1) ;
le module de réception d'adresse de dispositif (12) est configuré pour : après que l'enregistrement a été réussi, recevoir une adresse de dispositif attribué par le serveur de gestion central (2) au dispositif frontal (1) ;
**caractérisé en ce que**, le module de réception d'adresse de dispositif (12) est en outre configuré pour : après que l'enregistrement a été réussi, recevoir une adresse d'un serveur de gestion en ligne (3) envoyée par le serveur de gestion central (2) ;
et **en ce que** le module de mise en ligne (13) est configuré pour établir une connexion avec le serveur de gestion en ligne (3) selon l'adresse du serveur de gestion en ligne (3) et pour envoyer une demande portant l'adresse de dispositif au serveur de gestion en ligne (3), pour obtenir une autorisation de mise en ligne selon l'adresse de dispositif ; et pour recevoir une réponse à la demande renvoyée par le serveur de gestion en ligne (3).

6. Serveur de gestion central (2), comprenant un module d'enregistrement (21), un module d'attribution d'adresses (22), un module d'envoi d'adresses (23) et un module de corrélation d'adresses (24), dans lequel :
le module d'enregistrement(21) est configuré pour : recevoir une demande d'enregistrement à partir d'un dispositif frontal (1) de vidéosurveillance et faire un enregistrement, dans lequel la demande d'enregistrement porte une identification de dispositif personnelle du dispositif frontal (1) de vidéosurveillance
**caractérisé en ce que**, le module d'attribution d'adresses (22) est configuré pour : attribuer, après avoir fait enregistrement, une adresse de dispositif au dispositif frontal (1) de vidéosurveillance ;
le module d'envoi d'adresses (23) est configuré pour : envoyer l'adresse de dispositif au dispositif frontal (1) de vidéosurveillance ;
le module de corrélation d'adresses (24) est configuré pour : corréler l'adresse de dispositif avec l'identification de dispositif du dispositif frontal (1) et effectuer une sauvegarde ;
dans lequel le module d'envoi d'adresses (23) est en outre configuré pour : envoyer, après avoir fait l'enregistrement, une adresse d'un serveur de gestion en ligne (3) au dispositif frontal (1) de vidéosurveillance ; dans lequel le serveur de gestion en ligne (3) est chargé d'autoriser le dispositif frontal (1) de vidéosurveillance à se mettre en ligne selon l'adresse de dispositif.
